# EUROPEAN PATENT SPECIFICATION

(11) **EP 2 908 706 B1**
(45) Date of publication and mention of the grant of the patent: **14.12.2016**
(21) Application number: 13777037.6
(22) Date of filing: 15.10.2013
(51) Int. Cl.: A47J 31/36, A47J 31/06

(54) **EXTENSIBLE CARTRIDGE CAGE WITH A LOCK**
ERWEITERBARE KARTUSCHENAUFNAHME MIT ARRETIERUNG
CAGE DE CARTOUCHE EXTENSIBLE AVEC UN VERROU

(30) Priority: 19.10.2012 EP 12189153
(43) Date of publication of application: 26.08.2015
(73) Proprietor: Nestec S.A., 1800 Vevey (CH)
(72) Inventor: FLICK, Jean-Marc, 1405 Pomy (CH); BONACCI, Enzo, 1073 Savigny (CH)
(74) Representative: Schnyder, Frank Simon
(86) International application number: PCT/EP2013/071453
(87) International publication number: WO 2014/060370

(56) References cited:
- EP-A1- 1 208 782
- EP-A1- 1 219 217
- WO-A1-2006/003115
- WO-A1-2010/137951
- WO-A2-2011/042400

## Description

### Field of the Invention

The present invention relates to an extraction unit using cartridges that contain a beverage ingredient for preparing a beverage. The extraction unit is arranged for receiving cartridges of different sizes. The invention also relates to a combination of such an extraction unit with a cartridge and a use of a cartridge for such an extraction unit.

For the purpose of the present description, a "beverage" is meant to include any liquid food, such as tea, coffee, hot or cold chocolate, milk, soup, baby food, etc... A "cartridge" is meant to include any pre-portioned beverage ingredient within an enclosing packaging of any material, in particular an airtight packaging, e.g. plastic, aluminium, recyclable and/or biodegradable packagings, and of any shape and structure, including soft pods or rigid capsules containing the ingredient.

### Background Art

One problem encountered is the positioning of the cartridge in the device and the closing of the latter around the cartridge to perform the brewing process. The cartridge usually has to be positioned by the user on a cartridge support or in a housing, then the device is closed manually or automatically around the cartridge.

It is important to correctly position the cartridge so that the device closes correctly around the latter and a good seal is thus achieved to ensure good conditions of extraction. Bad positioning may damage the cartridge, and thus affect the conditions of extraction. The loading of the cartridge must also be easy, without trial and error as to the correct position of the cartridge in the device. The loading must also be as rapid as possible and not require excessive manipulations. Hence, devices exist that propose the insertion of the cartridge in a vertical plane and the movement of the extraction or infusion parts along a horizontal plane around the cartridge. Such systems have the advantages of allowing a loading from the top piggy-bank fashion, and makes for rapid loading. The positioning of the cartridge is then taken over by the movement of a movable part that pushes the cartridge against another part such as a water heater. However, these devices are complex to produce and are not suitable for low-cost and therefore entry-level coffee machines for the consumer market. They are therefore usually intended for the business market such as restaurants, bars or communities. For example, patent application WO 98/47418 relates to a device for the extraction of premeasured inserts in which the inserts are inserted vertically and are extracted horizontally. The disadvantage of this device is that it comprises two movable parts for the extraction, which makes the mechanical principle more complicated.

WO 2005/004683 relates to a cartridge brewing device comprising: a first part; a second part that can be moved relative to the first part; a housing for the cartridge and defining, in a closed position of the movable part against the fixed part, an extraction position of the cartridge along an axis in said housing; an insertion and positioning part comprising means for guiding the cartridge arranged so as to insert the cartridge by gravity and position such cartridge in an intermediate position; a drink pouring system; and the second movable part is so arranged and constructed to move the cartridge from the intermediate position into the extraction position when the device is closed.

EP 1 721 553 discloses a brewing unit for coffee machines using cartridges. The unit has a front part with a beverage outlet and a rear part with a hot water inlet. The front part and the rear part are mounted in-between a pair of facing shoulder guide members. The front part is movable in-between these guide members to be urged against the rear part so as to form with the rear part a brewing chamber for accommodating a cartridge to be extracted, whereby an unoccupied volume is left in front of the front member between the guide members within the machine.

EP 1 659 547 relates to a beverage machine for making infusions, in particular, espresso coffee. The machine includes an infusion chamber within a brewing unit that has a movable front part with a return spring and a beverage outlet duct that extends through the assembly's outer housing. The movable front part cooperates with a rear part that is movable within the housing and that can be pushed against the movable front part to compress the return spring whereby the outlet duct slides through the assembly's outer housing. The cartridge is passed through the external housing to the infusion chamber via a rigid cartridge feed channel and then the cartridge is transferred into the infusion chamber by an external bushing on the movable rear part of the brewing unit which is provided with a cam-like path for moving the rear part. This arrangement involves several problems. The cartridge must be moved during the closure of the brewing chamber and this can cause blocking and it also makes the retaining means of the pod more complex. Moreover, opening and closing the brewing chamber involves simultaneously a linear displacement of the movable rear part within the housing, of the movable front part within the housing and of the outlet duct through the housing which increases the risk of hyper-guiding and jamming or improper alignment of the various parts that linearly move one relative to another. The fluid system comprises a moving assembly which makes the fluid system more complex to assemble. When upon extraction brewing unit is re-opened for removing the cartridge, pressurized water contained within the infusion chamber may project outside the housing. Furthermore, an unoccupied volume is left within the machine between the front member and the casing when the outlet duct is in its retracted position.

US 3,260,190 and WO 2005/072574 disclose a coffee machine having a removable drawer for positioning a coffee can therein. The drawer can be slid horizontally into the coffee machine and lifted towards a water injection arrangement. WO 2006/023309 discloses a coffee machine with a slidable drawer for the introduction of a coffee cartridge into the machine. The drawer is movable between an open and a closed position and has two cartridge half-shells that are pivotable against each other to form a brewing chamber when the drawer is in the closed position and pivotable apart when the drawer is slid out from the machine. US 6,966,251 discloses a coffee machine having a horizontally slidable drawer for positioning a cartridge therein. When slid into the machine, the drawer can be moved upwards towards a fixed cartridge cage for form a brewing chamber for a cartridge. EP 1 566 126 discloses a coffee machine with a vertical brewing unit for accommodating coffee pods. The brewing unit has a fixed upper part and a movable lower part for holding a pod and that can be pulled up for closing the brewing unit and let down for inserting or removing a pod.

Further brewing units are disclosed in EP 0 730 425, EP 0 862 882, EP 1 219 217, EP 1 480 540, EP 1 635 680, EP 1 669 011, EP 1 774 878, EP 1 776 026, EP 1 893 064, FR 2 424 010, US 3,260,190, US 4,760,774, US 5,531,152, US 7,131,369, US 2005/0106288, US 2006/0102008, WO 2005/002405, WO 2005/016093, WO 2006/005756, WO 2006/066626 and WO 2007/135136.

A beverage preparation machine arranged to handle ingredient cartridges of different sizes is disclosed in EP 1 208 782.

### Summary of the Invention

One aspect of the present invention relates to an extraction unit for extracting cartridges of two different heights. The unit comprises a seat for receiving any of such cartridges for extraction thereof in the seat. The seat is delimited by a first part and a second part that are relatively movable between a cartridge extraction position and a cartridge loading and/or ejection position. The first delimiting part has a locking device, a first cavity part and a second cavity part. These cavity parts are relatively movable, such as telescopically movable, into first and second cavity positions for defining a cartridge cavity having selectively: a first depth for receiving a cartridge having a first height; and a second depth greater than said first depth for receiving a cartridge having a second height greater than said first height.

The height of the cartridge typically corresponds to the spacing between a cartridge upstream part and a cartridge downstream part or between the cartridge inlet and the cartridge outlet. The height of the cartridge may be defined by the dimension of the cartridge measured along the general direction of flow of liquid through the cartridge when the cartridge is extracted in the extraction unit.

First and second delimiting parts may be moved manually or automatically, e.g. by a motor or another actuator such as a fluid actuator, for instance as disclosed in EP 1767129, WO 2005/004683, WO 2007/135135, WO2007/135136, WO 2009/043630, WO 2011/042400, WO 2012/025258 or WO 2012/025259. The extraction unit may include an arrangement for stopping the cartridge in an intermediate position between the delimiting parts when they are in the cartridge loading position so that the cartridge is held until taken over by the delimiting parts moving to the extraction position. For example the stopping arrangement is of the type disclosed in WO2005/004683, the content of which is hereby included by way of reference, or a similar arrangement.

Such an extraction unit may be assembled in a beverage preparation machine as known in the art, e.g. provided with the functionalities disclosed in WO 2009/074550, e.g. a fluid line, a pump, a temperature conditioner such as a heater and/or a cooler, a water tank or other ingredient feeder, a waste ingredient collector, etc...

In accordance with the invention, the locking device is configured to lock the first and second cavity parts into at least one of the first and second cavity positions when the first and second delimiting parts are: in the cartridge loading and/or ejection position; or inbetween the cartridge extraction position and the cartridge loading and/or ejection position, closer to the cartridge loading and/or ejection position than to the cartridge extraction position.

For instance, the locking device is configured to lock the first and second cavity parts into at least one of the first and second cavity positions when the first and second delimiting parts are inbetween the cartridge extraction position and the cartridge loading and/or ejection position, at a distance from the cartridge loading and/or ejection position corresponding to less than 25%, in particular less than 15 or 10%, of a distance spacing the cartridge extraction position from the cartridge loading and/or ejection position.

The locking device can be mounted to the first cavity part, in particular via a frame of the first delimiting part, and may selectively lock and unlock movements of the second cavity part between first and second cavity positions. However, the first cavity part may have a position that is slightly adjustable relative to the first lock and the frame when present, e.g. to compensate for a mechanical play. In particular, the first cavity part of the first delimiting part may be urged, e.g. hydraulically, against the second delimiting part to seal the first delimiting part against the second delimiting part in the extraction position.

The locking device can be arranged to lock the first and second cavity parts in the first cavity position only.

The first and second cavity parts may be driven from the first to the second cavity position by the insertion of a cartridge of second height which pushes the cavity parts apart when the first and second delimiting parts are moved from their cartridge loading and/or ejection position to their cartridge extraction position.

The extraction unit may comprise an abutment against which a portion of the second cavity part is stopped while allowing motion of the first cavity part to drive the first and second cavity parts from the second to the first cavity position when the first and second delimiting parts are moved from their cartridge extraction position to their cartridge loading and/or ejection position.

The locking device may be arranged to automatically lock the first and second cavity parts when the first and second delimiting parts are relatively moved into the loading and/or ejection position. In the latter position, the locking device can be further arranged to maintain the locking or to unlock the first and second cavity parts depending on the height of the next cartridge that is inserted into the extraction unit.

In an embodiment, locking device comprises a locking member, such as a latch, that is pivotally and/or translationally movable between a locking position and an unlocking position to lock and unlock the first and second cavity parts. The locking member may comprise a profile that: in the locking position, interferes with a relative movement of the first and second cavity parts from the first to the second positions and/or vice versa; and in the unlocking position allows a relative movement of the first and second cavity parts from the first to the second positions and/or vice versa. At least one of the first and second cavity parts may have a profile which: in the unlocking position is allowed to pass along the profile of the locking member; and in the locking position, is prevented from passing along the profile of the locking member, the locking member profile optionally resting against an outer surface of the cavity part having this profile. Optionally, the cavity part profile and the locking member profile have generally matching shapes.

The locking device may comprise an automatic actuator, such as a motor, for locking and unlocking the first and second cavity parts. Optionally, the actuator is coupled to an actuator member via a gear transmission such as a toothed-wheel transmission. The automatic actuator may be controlled by a device for sensing a height of a cartridge inserted or to be inserted inbetween the first part and the second part. The sensing system may include a cartridge sensor of any type, e.g. optical, mechanical, electric, magnetic, capacitive, etc... or a combination of such types. Any sensor suitable for differentiating between cartridges 1a,1b can be used. The system may include a controller to which the sensor is connected and which controls the automatic actuator, e.g. the powering of actuator. The cartridge may be sensed automatically when it is inbetween the first and second delimiting parts and/or before the cartridge reaches a position between these delimiting parts.

In an embodiment the first delimiting part can have a mouth through which a cartridge of any of the suitable cartridge types enters the cartridge cavity, the mouth having a constant size in the first and the second cavity positions.

For instance, the first cavity part forms a peripheral wall of the cavity and the second cavity part forms a bottom of the cavity such as a bottom having a cartridge piercer. The second cavity part may telescope in and out of the first cavity part or vice versa.

In an embodiment, the first delimiting part has a frame securing the first and second cavity parts, at least one of the first and second cavity members can be movable in or along the frame. Optionally the first delimiting part comprises at least one guide member and/or at least one seal for interfacing the frame and the cavity member(s) movable in or along the frame.

The invention also relates to a combination of an extraction unit having a seat delimited by first and second parts, the first part having first and second cavity parts defining a cartridge cavity and a locking device as described above and a cartridge having a height selected from at least two different heights of cartridges receivable in such a seat. The locking device is configured to selectively lock and unlock the first and second cavity parts depending on the height of the cartridge to be received in the cartridge cavity.

The cartridge may have a generally cup-shaped body with a bottom, such as a receptacle for containing an ingredient, and a top, in particular a receptacle and a top that have a peripherally extending connecting flange, the cartridge has in particular an axis of symmetry optionally of revolution. The cartridge may be a sealed cartridge that is opened by insertion into the extraction unit and/or under the pressure of liquid circulating into the cartridge or it can be an open cartridge.

Another aspect of the invention relates to a use, for providing a combination as described above, of a cartridge having a height selected from at least two different heights of cartridges receivable in the seat. The height of the cartridge serves to control the locking device for selectively locking and unlocking the first and second cavity parts.

Further features and advantages of the invention will appear in the description of the detailed description.

### Brief Description of the Drawings

The invention will now be described with reference to the schematic drawings, wherein:
- Figures 1a and 1b show two cartridges of different sizes for extraction in an extraction unit according to the invention;
- Figures 2a and 2b are cross-sectional views an extraction unit having a locking device and the cartridges of Figs 1a and 1b according to the invention;
- Figures 3 to 3d show part of the extraction unit of Figs 2a and 2b in different states between a configuration for receiving selectively a cartridge of Fig. 1a and a cartridge of Fig. 1b; and
- Fig. 4 is an exploded view of a part of the extraction unit of Figs 2a to 3d.

### Detailed description

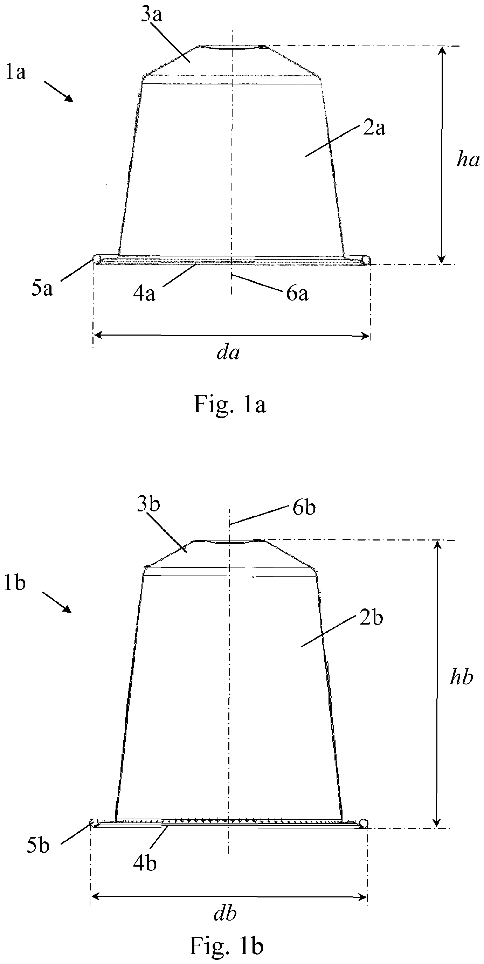

A particular non-limiting embodiment of the invention is now described in relation with Figures 1 to 4.

The invention relates to a cartridge extraction device 10 and cartridges 1a and 1b of different heights ha;hb that can be handled and extracted by such device 10. Extraction device 10 may be mounted in a beverage preparation machine as known in the art, e.g. provided with the functionalities disclosed in WO 2009/074550, e.g. a fluid line, a pump, a temperature conditioner such as a heater and/or a cooler, a water tank or other ingredient feeder, a waste ingredient collector, etc...

As illustrated in Figs 1a to 2b, cartridges 1a;1b can have a cup-shaped receptacle 2a;2b that have a generally cylindrical or frusto-conical or frusto-domical shape, in particular a combination of different sections with such shapes. Typically, receptacles 2a;2b have a frusto-conical obtuse bottom 3a;3b possibly with a slightly concave middle part and a fruto-conical acute body extending from the bottom towards the mouth of receptacle 2a;2b. The mouth may be covered with a lid 4a;4b. The entire or only part of the lid may be applied to the receptacle; or the entire lid may be formed integrally with the receptacle. Such a lid, e.g. an aluminium or plastic or paper foil, may extend laterally, typically beyond the mouth to form a flange 5a;5b. Cartridges 1a;1b may have an axis of symmetry 6a;6b. In particular, cartridges 1a;1b can generally have a shape of revolution about longitudinal axis 6a;6b. Other cartridge shapes are also contemplated, in particular: the cartridge receptacle may be formed of a single section, e.g. (frusto-) conical, (frusto-)domical or cylindrical; the bottom may be generally flat or acute.

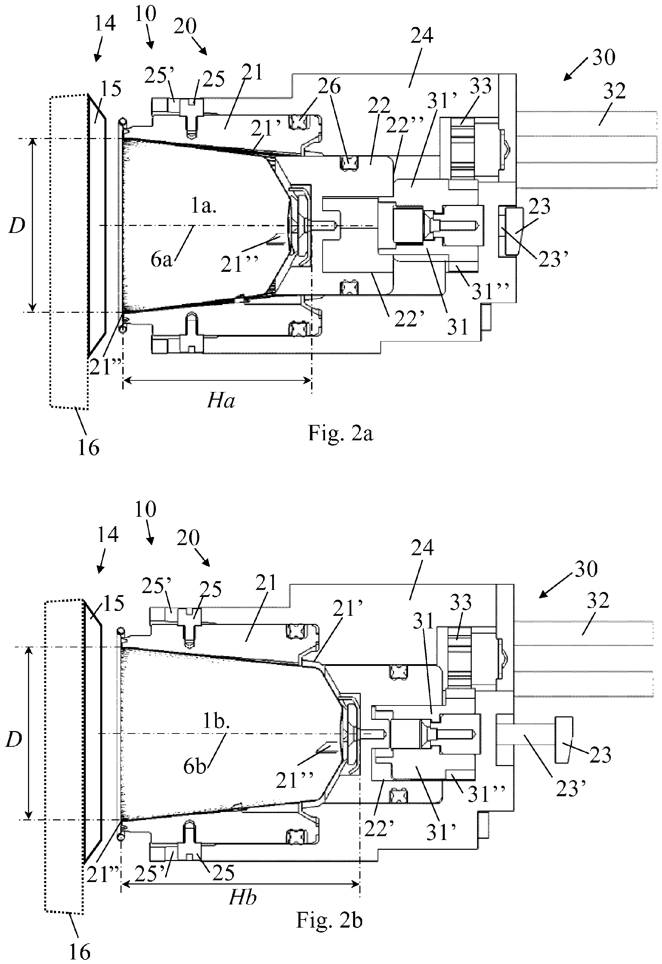

Cartridge 1a illustrated in Figs 1a and 2a has a height ha that is smaller than the corresponding height hb of cartridge 1b shown in Figs 1b and 2b. Height ha;hb of cartridge 1a;1b typically corresponds to the distance between a cartridge upstream part 3a;3b and a cartridge downstream part 4a;4b or between the cartridge inlet 3a;3b and the cartridge outlet 4a;4b. Height ha;hb of cartridge 1a;1b may be defined by the dimension of cartridge 1a;1b measured along the general direction of flow 6a;6b of liquid through cartridge 1a;1b when cartridge 1a;1b is extracted in extraction unit 10.

In the particular shown embodiment, cartridges 1a;1b have the same diameter of the mouth of receptacle 2a;2b, in particular when the cartridges 1a,1b are provided with flanges 5a;5b and or a lid 4a;4b of the same dimensions, e.g. of a diameter D.

Illustrated cartridge 1b has a greater inner volume than cartridge 1a and has thus more space for containing an ingredient, e.g. a beverage ingredient such as coffee, tea, cocoa, milk, etc...

For instance, cartridge 1a has a volume for containing 3-6 g ground coffee for the preparation on a ristretto or espresso coffee. Cartridge 1b may have a volume for containing 5-10 g ground coffee for the preparation of a lungo or americano coffee.

Cartridges 1a;1b may be used by circulating a liquid therethrough to mix it with an ingredient, e.g. a flavouring ingredient such as tea, coffee, cocoa, milk... and produce a beverage.

Liquid, e.g. heated or cold or cooled water, may be introduced at bottom 3a;3b, circulated inside the cartridge between the bottom and lid 4a;4b, e.g. generally along directions 6a;6b, and then collected at the lid, or vice versa.

The bottom and/or the lid of the cartridge may be opened or closed prior to use. When they are both opened, liquid is simply circulated through the cartridge, e.g. under pressure such as from above 1.5 bar to 25 bar, to form the beverage in the cartridge and collect it outside the cartridge. When the bottom and/or the lid is closed prior to use, the opening thereof may be achieved: prior to circulating the liquid, e.g. the bottom may be pierced by introducing appropriate piercing elements 22' into the bottom prior to water circulation as for example disclosed in WO 02/00073 or in WO 02/35977; or under the effect of the circulating liquid, e.g. the lid may be torn open as for example disclosed in EP 512468 or in EP 512470.

An embodiment according to the invention of a cartridge extraction unit 10 and parts thereof with and without extractible cartridges 1a and 1b, is illustrated in Figs 2 to 4.

Exemplary extraction unit 10 for extracting cartridges 1a;1b of two different heights ha;hb comprises a seat 14,20 for receiving any of such cartridges 1a;1b for extraction thereof in the seat. The seat is delimited by a first part 20,21,22 and a second part 14,15,16 that are relatively movable between a cartridge extraction position and a cartridge loading and/or ejection position.

First and second parts 14,20 may be relatively moved by a manual action, e.g. as disclosed in WO 2005/004683, WO 2007/135135, WO2007/135136 or WO 2009/043630, or by an automatic action in particular a motorized action, e.g. as disclosed in EP 1767129, WO 2012/025258 or in WO 2012/025259, or a hydraulic or mixed action e.g. as disclosed in WO 2011/042400.

First delimiting part 20,21,22 has a locking device 30, a first cavity part 21 and a second cavity part 22. Cavity parts 21,22 are relatively movable into first and second cavity positions for defining a cartridge cavity 21' having selectively: a first depth Ha for receiving cartridge 1a having a first height ha; and a second depth Hb greater than first depth Ha for receiving cartridge 1b having a second height hb greater than first height ha.

In Figs 2a and 2b, first and second parts 14,20 are illustrated in a position between the loading and/or ejection position and the extraction position, closer to the former. In the open and/or ejection position, parts 14,20 can typically be moved apart by a distance that can be greater than heights ha,hb to allow the insertion and/or removal of cartridge 1a or 1b from inbetween parts 14,20. In the illustrated particular example in Figs 2a and 2b cartridge 1a;1b would be inserted above and removed below unit 10 in a direction generally perpendicular to axis 6a;6b of cartridges 1a;1b when contained in cavity 21'.

Extraction unit 10 may be provided with a pair of guide members, e.g. slides cooperating with cartridge flanges 5a;5b or another cartridge part, for guiding cartridge 1a;1b towards and/or from inbetween parts 14,20.

Extraction unit 10 may include an arrangement for stopping cartridge 1a;1b in an intermediate position between parts 14,20 when they are in the cartridge loading position so that cartridge 1a;1b is held at least until it is taken over by parts 14,20 moving to the extraction position. For example the stopping arrangement is of the type disclosed in WO2005/004683, the content of which is hereby included by way of reference, or of a similar type.

For instance, second part 14 has an extraction plate 15 that may include opening members for instance of the type disclosed in EP 512 470 or simply one or more fluid passages. An outlet device 16 is typically associated with second part 14 for delivering the product extraction from cartridge 1a;1b. For example outlet device 16 is located above an area for placing a user-cup and/or mug to which a beverage prepared by extraction of cartridge 1a;1b can be delivered.

Cartridge 1a;1b may comprise a cup 2a;2b and a closing membrane 4a;4b which is sealed on the cup for forming a gastight enclosure containing ground coffee or tea or chocolate or another beverage ingredient. The membrane of the cartridge forms the beverage delivery side of the cartridge that is torn in contact with a puncture plate 14. Tearing of membrane 4a;4b can be obtained by the rise in pressure that takes place in cartridge 1a;1b during the circulation of water into the cartridge. Membrane 4a;4b of the cartridge is so perforated to provide many small apertures from which the beverage can be released. Alternatively, membrane 4a;4b may be pre-opened before use, e.g. preformed as a filter or sieve. In the latter case, an opening arrangement is not necessary but optional at extraction plate 15.

For instance, extraction unit 10 comprises a piston-type extraction seat for a cartridge having its own sealing member, as for example described in WO 2008/037642.

In accordance with the invention, locking device 30 is configured to lock first and second cavity parts 21,22 into at least one of first and second cavity positions when first and second delimiting parts 14,20 are: in the cartridge loading and/or ejection position; or inbetween cartridge extraction position and cartridge loading and/or ejection position, closer to the cartridge loading and/or ejection position than to the cartridge extraction position.

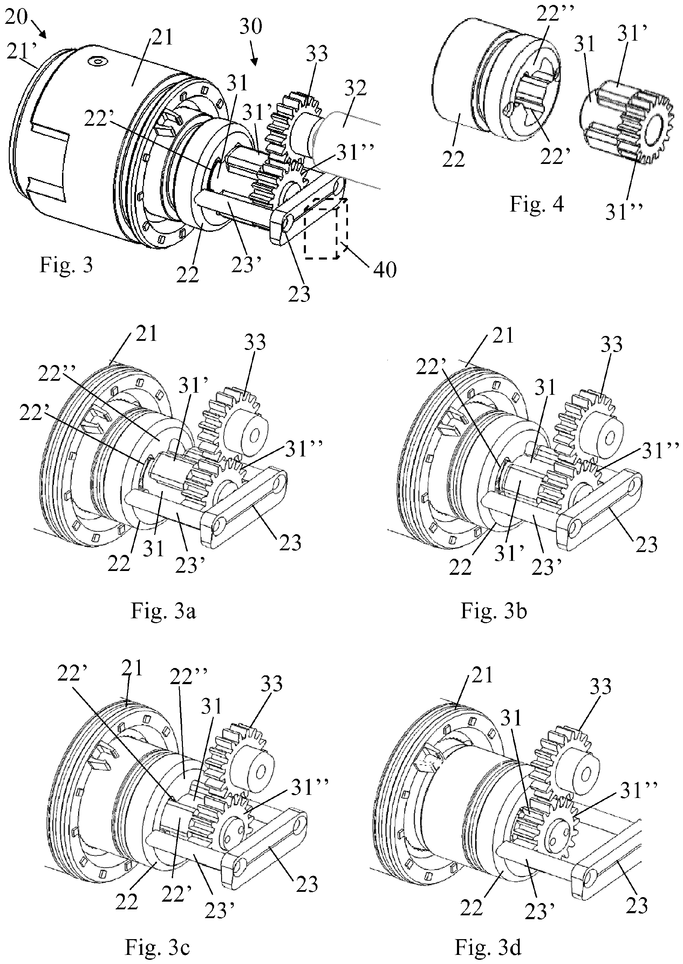

In the particular example illustrated in Figs 2a to 3d, locking device 30 blocks first and second cavity parts 21,22 into the first cavity position (Figs 2a, 3 and 3a) and unlocks them to allow movement between the first and second cavity positions (Figs 2b and 3b to 3d).

In a particular example, locking device 30 can be configured to lock first and second cavity parts 21,22 into at least one of first and second cavity positions when first and second delimiting parts 14,20 are inbetween the cartridge extraction position and the cartridge loading and/or ejection position, at a distance from the cartridge loading and/or ejection position corresponding to less than 25%, in particular less than 15 or 10%, of a distance spacing the cartridge extraction position from the cartridge loading and/or ejection position.

A frame 20' may be provided to assemble first and second cavity parts 21,22 and locking device 30.

Locking device 10 can be mounted to first cavity part 21, in particular via a frame 20' of first delimiting part 20, and selectively locks and unlocks movements of the second cavity part 22 between first and second cavity positions.

First cavity part 21 may have a position that is slightly adjustable relative to locking device 30 and frame 20' when present, e.g. to compensate for a mechanical play. In particular, first cavity part 21 of first delimiting part 20 may be urged, e.g. hydraulically, against second delimiting part 14 to seal first delimiting part 20 against second delimiting part 14 in the extraction position. Such a principle is for instance disclosed in EP 2 068 684. A seal 26 may be provided to prevent leakage between first cavity part 21 and frame 24.

In a particular embodiment, locking device 10 is arranged to lock the first and second cavity parts 21,22 in the first cavity position only.

Locking device 10 may be arranged to unlock the first and second cavity parts 21,22 such that these parts may move from the first to the second cavity position.

First and second cavity parts 21,22 can be driven from the first to the second cavity position by the insertion of a cartridge 1b of second height hb which pushes the cavity parts 21,22 apart when the first and second delimiting parts 14,20 are moved from their cartridge loading and/or ejection position to their cartridge extraction position. Cavity parts 21,22 may be maintained in the second position by the presence of cartridge 1b of second height hb and/or by a pressure raise in cavity 21' due to a circulation of a pressurised liquid, e.g. water, into cavity 21' during a cartridge extraction cycle.

Extraction unit 10 may include an abutment 40. For instance, abutment 40 is directly or indirection fixed to part 14, e.g. via a machine housing or frame (not shown). A portion 23,23' of second cavity part 22 can be stopped by reaching abutment 40 while allowing motion of first cavity part 21 to drive first and second cavity parts 21,22 from the second to the first cavity position when the first and second delimiting parts 14,20 are moved from their cartridge extraction position to their cartridge loading and/or ejection position. When portion 23,23' reaches abutment 40, second cavity part 22 is stopped and first cavity part 21 can continue to move. Portion 23, 23' can be formed of one or more arms 23' and a plate 23, e.g. all arranged in a U-shape and mounted on a bottom face 22' of second part 22. In a variation, an abutment may be placed laterally so that bottom 22" of second part 22 may itself form such a portion to be directly stopped by contact with the abutment. In the latter configuration there is no need to add such arms and/or plates or similar arrangements to stop the second parts. Obviously many alternative configurations are possible to provide the same function.

Locking device 30 can be arranged to automatically lock first and second cavity parts 21,22 when first and second delimiting parts 14,20 are relatively moved into the loading and/or ejection position. In the latter position, locking device 30 can be further arranged to maintain the locking or to unlock first and second cavity parts 21,22 depending on height ha;hb of the next cartridge 1a;1b that is inserted into extraction unit 10.

Locking device 30 typically comprises a locking member 31, such as a latch, that is pivotally and/or translationally movable between a locking position (Figs 2b, 3 and 3a) and an unlocking position (Figs 2a, 3b, 3c and 3d). Locking member 31 can comprise a profile 31' that: in the locking position interferes with a relative movement of the first and second cavity parts 21,22 from the first to the second positions and/or vice versa; and in the unlocking position allows a relative movement of the first and second cavity parts 21,22 from the first to the second positions and/or vice versa. At least one of the first and second cavity parts 21,22 may have a profile 22' which: in the unlocking position is allowed to pass along profile 31' of locking member 31; and in the locking position, is prevented from passing along profile 31' of the locking member 31, the locking member profile 31' optionally resting against an outer surface 22" of this cavity part 21,22 having the profile 22'. Cavity part profile 22' and locking member profile 31' optionally have generally matching shapes. The operation and structure of an exemplary locking member 31 cooperating with a cavity part 22 from a locking to an unlocking position and a relative movement of cavity parts 21,22 are illustrated in Figs 3 to 4.

Locking device 30 may comprise an automatic actuator 32, such as a motor, for locking and unlocking first and second cavity parts 21,22. For instance, actuator 32 is coupled to an actuator member 31 via a gear transmission 31",33 such as a toothed-wheel transmission. For example actuator 32 is configured to turn directly or indirectly locking member 31 between a fully locking position (Fig. 3) and fully unlocking position (Fig. 3b) to prevent relative movements of cavity parts 21,22 (Figs 3, 3a) or to allow such relative movements (Figs 3b, 3c and 3d). Instead of an automatic cartridge sensing system, it is also possible to input the information manually via a suitable user-interface or even to actuate the locking device manually.

For instance, automatic actuator 32 is controlled by a device for sensing a height ha;hb of a cartridge 1a;1b inserted or to be inserted inbetween the first part 20,21,22 and the second part 14,15,16. The sensing system may include a cartridge sensor of any type, e.g. optical, mechanical, electric, magnetic, capacitive, etc... or a combination of such types. Any sensor suitable for differentiating between cartridges 1a,1b can be used. The system may include a controller to which the sensor is connected and which controls automatic actuator 32, e.g. the powering of actuator 32. Cartridge 1a;1b may be sensed automatically when it is inbetween first and second delimiting parts 14,20 and/or before cartridge 1a;1b reaches a position between these parts 14,20.

First delimiting part 20,21,22 can have a mouth 21" through which any cartridge of the suitable cartridges 1a;1b enters cartridge cavity 21'. The mouth 21" typically has a constant size, e.g. diameter D, in the first and the second cavity positions. In a variation, it is of course possible to use cartridges having different sizes da,db, the mouth of the first delimiting part being adjustable to such different sizes, e.g. as disclosed in co-pending applications EP12187716.1, EP12187717.9 and EP12187718.7.

First cavity part 21 may form a peripheral wall of the cavity 21' and second cavity part 22 can form a bottom of cavity 21'.

Second cavity part 22 may telescope in and out of first cavity part 21 and/or vice versa.

Cavity 21' may have a bottom associated with a cartridge piercer 21", such as a plurality blades 21". Cavity 21' is typically associated with one or more liquid conduits configured to circulated liquid into and/or out of cavity 21' during extraction of a cartridge 1a;1b. For example, water can be circulated into cavity 21' containing cartridge 1a;1g. The water mixes with the ingredient contained in the cartridge. The water-ingredient mix is delivered via lid 4a;4b; extraction plate 15 and outlet 16 to a user-receptacle (e.g. a mug or cup).

First delimiting part 20,21,22 may have a frame 24 securing first and second cavity parts 21,22, at least one of first and second cavity members 21,22 being movable in or along frame 24. Optionally first delimiting part 20,21,22 comprises at least one guide member 25 and/or at least one seal 26 for interfacing frame 24 and cavity member(s) 21,22 movable therein or therealong. A suitable seal may be an O-ring seal. A suitable guide member may be in the shape of a pin or screw or protrusion 25 cooperating with a corresponding groove or recess 25'. Groove or recess or protrusion 25' may be formed in frame 24 and pin or screw or protrusion 25 may be fixed to at least one cavity member 21,22, or vice versa.

## Claims

1. An extraction unit (10) for extracting cartridges (1a;1b) of two different heights (ha;hb) comprising a seat (14,20) for receiving any of said cartridges (1a;1b) for extraction thereof in the seat, the seat being delimited by a first part (20,21,22) and a second part (14,15,16) that are relatively movable between a cartridge extraction position and a cartridge loading and/or ejection position, the first delimiting part (20,21,22) having a locking device (30), a first cavity part (21) and a second cavity part (22), which cavity parts (21,22) are relatively movable, such as telescopically movable, into first and second cavity positions for defining a cartridge cavity (21') having selectively:
- a first depth (Ha) for receiving a cartridge (1a) having a first height (ha); and
- a second depth (Hb) greater than said first depth (Ha) for receiving a cartridge (1b) having a second height (hb) greater than said first height (ha),
**characterised in that** the locking device (30) is configured to lock the first and second cavity parts (21,22) into at least one of the first and second cavity positions when the first and second delimiting parts (14,20) are:
- in the cartridge loading and/or ejection position; or
- inbetween the cartridge extraction position and the cartridge loading and/or ejection position, closer to the cartridge loading and/or ejection position than to the cartridge extraction position.

2. The unit of claim 1, wherein the locking device (30) is configured to lock the first and second cavity parts (21,22) into at least one of the first and second cavity positions when the first and second delimiting parts (14,20) are inbetween the cartridge extraction position and the cartridge loading and/or ejection position, at a distance from the cartridge loading and/or ejection position corresponding to less than 25%, in particular less than 15 or 10%, of a distance spacing the cartridge extraction position from the cartridge loading and/or ejection position.

3. The unit of claim 1 or 2, wherein the locking device (10) is mounted to the first delimiting part (21), in particular via a frame (20') of the first delimiting part (20), and selectively locks and unlocks movements of the second cavity part (22) between first and second cavity positions.

4. The unit of any preceding claim, wherein the locking device (10) is arranged to lock the first and second cavity parts (21,22) in the first cavity position only.

5. The unit of any preceding claim, wherein the first and second cavity parts (21,22) are driven from the first to the second cavity position by the insertion of a cartridge (1b) of second height (hb) which pushes the cavity parts (21,22) apart when the first and second delimiting parts (14,20) are moved from their cartridge loading and/or ejection position to their cartridge extraction position.

6. The unit of any preceding claim, which comprises an abutment (40) against which a portion (23,23') of the second cavity part (22) is stopped while allowing motion of the first cavity part (21) to drive the first and second cavity parts (21,22) from the second to the first cavity position when the first and second delimiting parts (14,20) are moved from their cartridge extraction position to their cartridge loading and/or ejection position.

7. The unit of any preceding claim, wherein locking device (30) is arranged to automatically lock the first and second cavity parts (21,22) when the first and second delimiting parts (14,20) are relatively moved into the loading and/or ejection position.

8. The unit of any preceding claim, wherein the locking device (30) comprises a locking member (31), such as a latch, that is pivotally and/or translationally movable between a locking position and an unlocking position.

9. The unit of claim 8, wherein the locking member (31) comprises a profile (31') that:
- in the locking position interferes with a relative movement of the first and second cavity parts (21,22) from the first to the second positions and/or vice versa; and
- in the unlocking position allows a relative movement of the first and second cavity parts (21,22) from the first to the second positions and/or vice versa.

10. The unit of claim 9, wherein at least one of the first and second cavity parts (21,22) has a profile (22') which:
- in the unlocking position is allowed to pass along the profile (31') of the locking member (31); and
- in the locking position, is prevented from passing along the profile (31') of the locking member (31), the locking member profile (31') optionally resting against an outer surface (22") of said cavity part (21,22) having said profile (22'),
the cavity part profile (22') and the locking member profile (31') having in particular generally matching shapes.

11. The unit of any preceding claim, wherein the locking device (30) comprises an automatic actuator (32), such as a motor, for locking and unlocking the first and second cavity parts (21,22), optionally the actuator (32) being coupled to an actuator member (31) via a gear transmission (31",33) such as a toothed-wheel transmission.

12. The unit of claim 11, wherein the automatic actuator (32) is controlled by a device for sensing a height (ha,hb) of a cartridge (1a,1b) inserted or to be inserted inbetween the first part (20,21,22) and the second part (14, 15, 16).

13. The unit of any preceding claim, wherein the first delimiting part (20,21,22) has a mouth (21") through which any of said cartridges (1a,1b) enters the cartridge cavity (21'), the mouth (21") having a constant size (D) in the first and the second cavity positions.

14. The unit of any preceding claim, wherein the first cavity part (21) forms a peripheral wall of the cavity (21') and the second cavity part (22) forms a bottom of the cavity such as a bottom having a cartridge piercer (21"), optionally the second cavity part (22) telescoping in and out of the first cavity part (21) or vice versa.

15. The unit of any preceding claim, wherein the first delimiting part (20,21,22) has a frame (24) securing the first and second cavity parts (21,22), at least one of the first and second cavity members (21,22) being movable in or along the frame (24), optionally the first delimiting part (20,21,22) comprising at least one guide member (25) and/or at least one seal (26) for interfacing the frame (24) and the cavity member(s) (21,22) movable in or along the frame.

16. A combination of an extraction unit (10) as defined in any preceding claim and a cartridge (1a;1b) having a height selected from at least two different heights (ha;hb) of cartridges (1a;1b) receivable in said seat, wherein the locking device (30) is configured to selectively lock and unlock the first and second cavity parts (21,22) depending on the height (ha;hb) of said cartridge (1a;1b) to be received in the cartridge cavity (21').

17. The combination of claim 16, wherein the cartridge (1a;1b) has a generally cup-shaped body (2a;2b) with a bottom (3a;3b), such as a receptacle for containing an ingredient, and a top (4a;4b), in particular a receptacle and a top that have a peripherally extending connecting flange (5a;5b), the cartridge having in particular an axis (6a;6b) of symmetry optionally of revolution.

18. Use, for providing a combination as defined in claim 16 or 17, of a cartridge (1a;1b) having a height selected from at least two different heights (ha;hb) of cartridges (1a;1b) receivable in said seat (14,20), wherein the height (ha;hb) of said cartridge (1a;1b) serves to control the locking device (30) for selectively locking and unlocking the first and second cavity parts (21,22).

## Patentansprüche

1. Extraktionseinheit (10) zum Extrahieren von Kartuschen (1a; 1 b) mit zwei verschiedenen Höhen (ha; hb), umfassend eine Aufnahme (14, 20) zum Aufnehmen einer der Kartuschen (1 a; 1 b) zu deren Extraktion in der Aufnahme, wobei die Aufnahme durch einen ersten Teil (20, 21, 22) und einen zweiten Teil (14, 15, 16) begrenzt wird, die relativ zwischen einer Position zum Extrahieren der Kartusche und einer Position zum Laden der Kartusche und/oder zum Auswerfen der Kartusche beweglich sind, wobei der erste begrenzende Teil (20, 21, 22) eine Verriegelungsvorrichtung (30), einen ersten Hohlraumteil (21) und einen zweiten Hohlraumteil (22) aufweist, wobei die Hohlraumteile (21, 22) relativ - wie z. B. teleskopisch - beweglich sind, in die erste und zweite Hohlraumposition zur Definition eines Kartuschenhohlraums (21'), mit selektiv:
- einer ersten Tiefe (Ha) zum Aufnehmen einer Kartusche (1a), die eine erste Höhe (ha) aufweist; und
- einer zweiten Tiefe (Hb), die größer ist als die genannte erste Tiefe (Ha) zur Aufnahme einer Kartusche (1 b), mit einer zweiten Höhe (hb), die größer ist als die genannte erste Höhe (ha),
**dadurch gekennzeichnet, dass** die Verriegelungsvorrichtung (30) entsprechend konfiguriert ist, um den ersten und den zweiten Hohlraumteil (21, 22) in mindestens einer der ersten und zweiten Hohlraumpositionen zu verriegeln, wenn sich der erste und der zweite begrenzende Teil (14, 20):
- in der Position zum Laden und/oder Auswerfen der Kartusche befinden; oder
- zwischen der Position zum Extrahieren der Kartusche und der Position zum Laden und/oder Auswerfen der Kartusche, näher an der Position zum Laden und/oder Auswerfen der Kartusche als an der Position zum Extrahieren der Kartusche, befinden.

2. Einheit gemäß Anspruch 1, wobei die Verriegelungsvorrichtung (30) dazu konfiguriert ist, den ersten und den zweiten Hohlraumteil (21, 22) in mindestens einer der ersten und zweiten Hohlraumpositionen zu verriegeln, wenn sich der erste und der zweite begrenzende Teil (14, 20) zwischen der Position zum Extrahieren der Kartusche und der Position zum Laden und/oder Auswerfen der Kartusche in einem Abstand von der Position zum Laden und/oder Auswerfen der Kartusche von weniger als 25 %, insbesondere weniger als 15 oder 10 % des Abstands zwischen der Position zum Extrahieren der Kartusche und der Position zum Laden und/oder Auswerfen der Kartusche befinden.

3. Einheit gemäß Anspruch 1 oder 2, wobei die Verriegelungsvorrichtung (10) am ersten begrenzenden Teil (21) angebaut ist, insbesondere über einen Rahmen (20') des ersten begrenzenden Teils (20), und selektiv die Bewegungen des zweiten Hohlraumteils (22) zwischen den ersten und zweiten Hohlraumpositionen verriegelt und entriegelt.

4. Einheit gemäß einem der vorstehenden Ansprüche, wobei die Verriegelungsvorrichtung (10) dazu angeordnet ist, die ersten und zweiten Hohlraumteile (21, 22) nur in der ersten Hohlraumposition zu verriegeln.

5. Einheit gemäß einem der vorstehenden Ansprüche, wobei die ersten und zweiten Hohlraumteile (21, 22) von der ersten zur zweiten Hohlraumposition durch Einsetzen einer Kartusche (1 b) der zweiten Höhe (hb) angetrieben werden, die die Hohlraumteile (21, 22) auseinander drückt, wenn der erste und der zweite begrenzende Teil (14, 20) von ihrer Position zum Laden und/oder Auswerfen der Kartusche in deren Position zum Extrahieren der Kartusche bewegt werden.

6. Einheit gemäß einem der vorstehenden Ansprüche, umfassend ein Auflager (40), gegen das ein Teil (23, 23') des zweiten Hohlraumteils (22) zum Anschlag kommt, während die Bewegung des ersten Hohlraumteils (21) zum Verschieben des ersten und zweiten Hohlraumteils (21, 22) von der zweiten zur ersten Hohlraumposition zugelassen wird, wenn der erste und zweite begrenzende Teil (14, 20) von seiner jeweiligen Position zum Extrahieren der Kartusche in die Position zum Laden und/oder Auswerfen der Kartusche bewegt wird.

7. Einheit gemäß einem der vorstehenden Ansprüche, wobei die Verriegelungsvorrichtung (30) dazu angeordnet ist, automatisch die ersten und zweiten Hohlraumteile (21, 22) zu verriegeln, wenn das erste und zweite begrenzende Teil (14, 20) relativ in die Lade- oder Auswurfposition bewegt wird.

8. Einheit gemäß einem der vorstehenden Ansprüche, wobei die Verriegelungsvorrichtung (30) ein Verriegelungselement (31) umfasst, zum Beispiel einen Riegel, der schwenkbar gelagert und/oder verschiebbar zwischen einer Verriegelungsposition und einer Entriegelungsposition beweglich ist.

9. Einheit gemäß Anspruch 8, wobei das Verriegelungselement (31) ein Profil (31') umfasst, das:
- in der Verriegelungsposition eine relative Bewegung des ersten und zweiten Hohlraumteils (21, 22) aus der ersten in die zweite Position und/oder umgekehrt behindert; und
- in der Entriegelungsposition eine relative Bewegung des ersten und zweiten Hohlraumteils (21, 22) aus der ersten in die zweite Position und/oder umgekehrt zulässt.

10. Einheit gemäß Anspruch 9, wobei mindestens eines der ersten und zweiten Hohlraumteile (21, 22) ein Profil (22') aufweist, das:
- in der Entriegelungsposition das Profil (31') des Verriegelungselements (31) passieren lässt; und
- in Verriegelungsposition das Passieren des Profils (31') des Verriegelungselements (31) verhindert, wobei das Verriegelungselementprofil (31') optional an einer Außenfläche (22") des genannten Hohlraumteils (21, 22), welches das genannte Profil (22') aufweist, aufliegt,
und wobei das Hohlraumteilprofil (22') und das Verriegelungselementprofil (31') insbesondere allgemein zusammenpassende Formen aufweisen.

11. Einheit gemäß einem der vorstehenden Ansprüche, wobei die Verriegelungsvorrichtung (30) einen automatischen Stellantrieb (32) umfasst, zum Beispiel einen Motor, um die ersten und zweiten Hohlraumteile (21, 22) zu verriegeln und zu entriegeln, wobei der Stellantrieb (32) optional an ein Betätigungselement (31) über ein Getriebe (31", 33), z. B. ein Zahnradgetriebe, gekoppelt sein kann.

12. Einheit gemäß Anspruch 11, wobei der automatische Stellantrieb (32) durch ein Gerät gesteuert wird, das eine Höhe (ha, hb) einer Kartusche (1 a, 1 b) erfasst, die zwischen dem ersten Teil (20, 21, 22) und dem zweiten Teil (14, 15, 16) eingesetzt ist oder eingesetzt werden soll.

13. Einheit gemäß einem der vorstehenden Ansprüche, wobei das erste begrenzende Teil (20, 21, 22) eine Öffnung (21") aufweist, durch die eine der Kartuschen (1a, 1 b) in den Kartuschenhohlraum (21') eintritt, wobei die Öffnung (21") in der ersten und zweiten Hohlraumposition eine konstante Größe (D) aufweist.

14. Einheit gemäß einem der vorstehenden Ansprüche, wobei der erste Hohlraumteil (21) eine Umfangswand des Hohlraums (21') bildet und der zweite Hohlraumteil (22) einen Boden des Hohlraums bildet, so dass der Boden über einen Dorn für die Kartusche (21") verfügt, wobei optional der zweite Hohlraumteil (22) teleskopartig in den ersten Hohlraumteil (21) ein- und aus ihm ausgefahren wird, oder umgekehrt.

15. Einheit gemäß einem der vorstehenden Ansprüche, wobei der erste begrenzende Teil (20, 21, 22) über einen Rahmen (24) verfügt, der die ersten und zweiten Hohlraumteile sichert (21, 22), wobei mindestens eines des ersten und zweiten Hohlraumelemente (21, 22) in oder entlang dem Rahmen (24) beweglich ist, wobei das erste begrenzende Teil (20, 21, 22) optional mindestens ein Führungselement (25) und/oder mindestens eine Dichtung (26) zum Verbinden des Rahmens (24) mit dem/den in oder entlang dem Rahmen beweglichen Hohlraumelement(en) (21, 22) umfasst.

16. Kombination aus einer Extraktionseinheit (10), wie in einem der vorstehenden Ansprüche definiert, und einer Kartusche (1a; 1 b) mit einer Höhe, die aus mindestens zwei unterschiedlichen Höhen (ha; hb) der Kartuschen (1a; 1 b) zum Aufnehmen in der Aufnahme ausgewählt wird, wobei die Verriegelungsvorrichtung (30) so konfiguriert ist, dass sie selektiv je nach der Höhe (ha; hb) der Kartusche (1a; 1 b), die im Kartuschenhohlraum (21') aufgenommen werden soll, die ersten und zweiten Hohlraumpositionen (21, 22) verriegelt und entriegelt.

17. Kombination aus Anspruch 16, wobei die Kartusche (1a; 1 b) aus einem im Allgemeinen becherförmigen Körper (2a; 2b) mit einem Boden (3a; 3b) besteht, wie zum Beispiel einem Behälter zur Aufnahme einer Zutat, und einem Oberteil (4a; 4b), insbesondere einem Behälter und einem Oberteil, die einen umlaufenden Verbindungsflansch (5a; 5b) aufweisen, wobei die Kartusche insbesondere optional eine Symmetrieachse (6a; 6b) zur Drehung aufweist.

18. Verwendung zum Bereitstellen einer Kombination, nach der Definition in Anspruch 16 oder 17, einer Kartusche (1a; 1 b) mit einer Höhe, die aus mindestens zwei unterschiedlichen Höhen (ha; hb) der Kartuschen (1a; 1 b) zum Aufnehmen in der Aufnahme (14, 20) ausgewählt ist, wobei die Höhe (ha; hb) der genannten Kartusche (1a; 1 b) dazu dient, die Verriegelungsvorrichtung (30) zum selektiven Verriegeln und Entriegeln der ersten und zweiten Hohlraumteile (21, 22) zu steuern.

## Revendications

1. Unité d'extraction (10) pour l'extraction de cartouches (1a; 1b) de deux hauteurs différentes (ha ; hb) comprenant un siège (14, 20) destiné à recevoir l'une quelconque desdites cartouches (1a ; 1 b) pour l'extraction de celle-ci dans le siège, le siège étant délimité par une première pièce (20, 21, 22) et une deuxième pièce (14, 15, 16) qui sont mobiles de façon relative entre une position d'extraction de cartouche et une position de chargement et/ou d'éjection de cartouche, la première pièce de délimitation (20, 21, 22) comportant un dispositif de verrouillage (30), une première pièce formant cavité (21) et une deuxième pièce formant cavité (22), lesquelles pièces formant cavité (21, 22) sont mobiles entre elles, par exemple mobiles de façon télescopique, vers des première et deuxième positions de cavité pour définir une cavité de cartouche (21') comportant de façon sélective :
- une première profondeur (Ha) destinée à recevoir une cartouche (1a) présentant une première hauteur (ha) ; et
- une deuxième profondeur (Hb) supérieure à ladite première profondeur (Ha) destinée à recevoir une cartouche (1 b) présentant une deuxième hauteur (hb) supérieure à ladite première hauteur (ha) ;
**caractérisée en ce que** le dispositif de verrouillage (30) est configuré pour verrouiller les première et deuxième pièces formant cavité (21, 22) dans au moins une des première et deuxième positions de cavité lorsque les première et deuxième pièces de délimitation (14, 20) se trouvent :
- dans la position de chargement et/ou d'éjection de la cartouche ; ou
- entre la position d'extraction de la cartouche et la position de chargement et/ou d'éjection de la cartouche, plus proche de la position de chargement et/ou d'éjection de la cartouche que de la position d'extraction de la cartouche.

2. Unité selon la revendication 1, dans laquelle le dispositif de verrouillage (30) est configuré pour verrouiller les première et deuxième pièces formant cavité (21, 22) dans au moins une des première et deuxième positions de cavité lorsque les première et deuxième pièces de délimitation (14, 20) se trouvent entre la position d'extraction de la cartouche et la position de chargement et/ou d'éjection de la cartouche, à une distance de la position de chargement et/ou d'éjection de la cartouche correspondant à moins de 25 %, en particulier moins de 15 ou 10 %, d'une distance séparant la position d'extraction de la cartouche de la position de chargement et/ou d'éjection de la cartouche.

3. Unité selon la revendication 1 ou 2, dans laquelle le dispositif de verrouillage (10) est monté sur la première pièce de délimitation (21), en particulier par l'intermédiaire d'un support (20') de la première pièce de délimitation (20), et verrouille et déverrouille sélectivement les mouvements de la deuxième pièce formant cavité (22) entre les première et deuxième positions de cavité.

4. Unité selon l'une quelconque des revendications précédentes, dans laquelle le dispositif de verrouillage (10) est agencé pour verrouiller les première et deuxième pièces formant cavité (21, 22) dans la première position de cavité seulement.

5. Unité selon l'une quelconque des revendications précédentes, dans laquelle les première et deuxième pièces formant cavité (21, 22) sont entraînées de la première à la deuxième position de cavité par l'insertion d'une cartouche (1 b) de la deuxième hauteur (hb) qui sépare les pièces formant cavité (21, 22) lorsque les première et deuxième pièces de délimitation (14, 20) sont déplacées de leur position de chargement et/ou d'éjection de la cartouche à leur position d'extraction de la cartouche.

6. Unité selon l'une quelconque des revendications précédentes, qui comprend une butée (40) contre laquelle une partie (23, 23') de la deuxième pièce formant cavité (22) est arrêtée tout en permettant le mouvement de la première pièce formant cavité (21) pour entraîner les première et deuxième pièces formant cavité (21, 22) de la deuxième à la première position de cavité lorsque les première et deuxième pièces de délimitation (14, 20) sont déplacées de leur position d'extraction de la cartouche à leur position de chargement et/ou d'éjection de la cartouche.

7. Unité selon l'une quelconque des revendications précédentes, dans laquelle le dispositif de verrouillage (30) est agencé pour verrouiller automatiquement les première et deuxième pièces formant cavité (21, 22) lorsque les première et deuxième pièces de délimitation (14, 20) sont déplacées de façon relative à la position de chargement et/ou d'éjection.

8. Unité selon l'une quelconque des revendications précédentes, dans laquelle le dispositif de verrouillage (30) comprend un élément de verrouillage (31), tel qu'un loquet, pouvant être déplacé en rotation et/ou en translation entre une position de verrouillage et une position de déverrouillage.

9. Unité selon la revendication 8, dans laquelle l'élément de verrouillage (31) comprend un profil (31') qui :
- dans la position de verrouillage, interfère avec un mouvement relatif des première et deuxième pièces formant cavité (21, 22) de la première à la deuxième position et/ou vice-versa ; et
- dans la position de déverrouillage, permet un mouvement relatif des première et deuxième pièces formant cavité (21, 22) de la première à la deuxième position et/ou vice-versa.

10. Unité selon la revendication 9, dans laquelle au moins une des première et deuxième pièces formant cavité (21, 22) possède un profil (22') qui :
- dans la position de déverrouillage, a la possibilité de passer le long du profil (31') de l'élément de verrouillage (31) ; et
- dans la position de verrouillage, est empêché de passer le long du profil (31') de l'élément de verrouillage (31), le profil de l'élément de verrouillage (31') s'appuyant facultativement contre une surface extérieure (22") de ladite pièce formant cavité (21, 22) possédant ledit profil (22'),
le profil (22') de la pièce formant cavité et le profil (31') de l'élément de verrouillage présentant en particulier des formes qui se correspondent globalement.

11. Unité selon l'une quelconque des revendications précédentes, dans laquelle le dispositif de verrouillage (30) comprend un actionneur automatique (32), tel qu'un moteur, pour verrouiller et déverrouiller les première et deuxième pièces formant cavité (21, 22), l'actionneur (32) étant facultativement couplé à un organe de manoeuvre (31) par l'intermédiaire d'une transmission à engrenages (31 ", 33), telle qu'une transmission à roue dentée.

12. Unité selon la revendication 11, dans laquelle l'actionneur automatique (32) est commandé par un dispositif de détection d'une hauteur (ha, hb) d'une cartouche (1a, 1 b) insérée ou à insérer entre la première pièce (20, 21, 22) et la deuxième pièce (14, 15, 16).

13. Unité selon l'une quelconque des revendications précédentes, dans laquelle la première pièce de délimitation (20, 21, 22) comporte une ouverture (21 ") à travers laquelle l'une quelconque desdites cartouches (1a, 1 b) pénètre dans la cavité de cartouche (21'), l'ouverture (21 ") ayant une taille constante (D) dans les première et deuxième positions de cavité.

14. Unité selon l'une quelconque des revendications précédentes, dans laquelle la première pièce formant cavité (21) forme une paroi périphérique (21') de la cavité et la deuxième pièce formant cavité (22) forme un fond de la cavité, tel qu'un fond comportant un perforateur (21 ") de cartouche, la deuxième pièce formant cavité (22), en option, pénétrant dans, ou sortant de, la première pièce formant cavité (21) de façon télescopique ou vice versa.

15. Unité selon l'une quelconque des revendications précédentes, dans laquelle la première pièce de délimitation (20, 21, 22) comporte un support (24) fixant les première et deuxième pièces formant cavité (21, 22), au moins l'une des première et deuxième pièces formant cavité (21, 22) pouvant se déplacer dans le support (24), ou le long de celui-ci, la première pièce de délimitation (20, 21, 22) comprenant au moins un élément de guidage (25) et/ou au moins un joint (26) pour assurer l'interface entre le support (24) et la ou les pièces formant cavité (21, 22) pouvant être déplacées dans le support ou le long de celui-ci.

16. Combinaison d'une unité d'extraction (10) telle que définie dans l'une quelconque des revendications précédentes et d'une cartouche (1a ; 1 b) possédant une hauteur choisie parmi au moins deux hauteurs différentes (ha ; hb) de cartouches (1a ; 1 b) pouvant être reçues dans ledit siège, dans laquelle le dispositif de verrouillage (30) est configuré pour verrouiller et déverrouiller de manière sélective les première et deuxième pièces formant cavité (21, 22) en fonction de la hauteur (ha ; hb) de ladite cartouche (1a ; 1 b) à recevoir dans la cavité de cartouche (21').

17. Combinaison selon la revendication 16, dans laquelle la cartouche (1a ; 1 b) a un corps (2a ; 2b) ayant la forme générale d'un godet avec un fond (3a ; 3b), tel qu'un récipient destiné à contenir un ingrédient, et une partie supérieure (4a ; 4b), en particulier un récipient et une partie supérieure comportant une bride de raccordement (5a ; 5b) s'étendant de façon périphérique, la cartouche comportant en particulier un axe de symétrie (6a ; 6b), éventuellement de révolution.

18. Utilisation, pour fournir une combinaison telle que définie dans la revendication 16 ou 17, d'une cartouche (1a ; 1 b) possédant une hauteur choisie parmi au moins deux hauteurs différentes (ha ; hb) de cartouches (1a ; 1 b) pouvant être reçues dans ledit siège (14, 20), dans laquelle la hauteur (ha ; hb) de ladite cartouche (1a ; 1 b) sert à commander le dispositif de verrouillage (30) pour verrouiller et déverrouiller sélectivement les première et deuxième pièces formant cavité (21, 22).
